## Europäisches Patentamt
## European Patent Office
## Office européen des brevets

(11) Veröffentlichungsnummer: **0 536 576 A1**

# EUROPÄISCHE PATENTANMELDUNG

(21) Anmeldenummer: **92116061.0**

(22) Anmeldetag: **19.09.92**

(51) Int. Cl.5: **B41M 5/30**, C09C 3/06, C09C 1/02, C09C 1/40, C09C 1/42, C09C 1/00

(30) Priorität: **08.10.91 DE 4133318**

(43) Veröffentlichungstag der Anmeldung: **14.04.93 Patentblatt 93/15**

(84) Benannte Vertragsstaaten: **BE DE ES FR GB IT SE**

(71) Anmelder: **SÜD-CHEMIE AG**
**Lenbachplatz 6**
**W-8000 München 2(DE)**

(72) Erfinder: **Hähn, Reinhard, Dr.**
**Pressgasse 1**
**W-8300 Landshut(DE)**
Erfinder: **Ruf, Friedrich, Dr.**
**Schlossfeld 7**
**W-8311 Ast(DE)**

(74) Vertreter: **Reitzner, Bruno, Dr. et al**
**Patentanwälte Dipl.-Ing. R. Splanemann Dr.**
**B. Reitzner, Dipl.-Ing. K. Baronetzky Tal 13**
**W-8000 München 2 (DE)**

(54) **Füllstoffe für wärmeempfindliche Aufzeichnungsmaterialien.**

(57) Beschrieben wird ein teilchenförmiges Material zur Verwendung als Füllstoff in der wärmeempfindlichen Schicht eines wärmeempfindlichen Aufzeichnungsmaterials, das dadurch gekennzeichnet ist, daß das Material in Form von feinteiligen Weißpigmenten vorliegt, die überwiegend mit amorpher Fällungskieselsäure verbunden sind, wobei die amorphe Fällungskieselsäure das feinteilige Weißpigment entweder (a) schichtförmig umhüllt oder (b) in Form feiner Teilchen punktförmig mit dem feinteiligen Weißpigment verbunden ist, wobei der Wassergehalt des Materials (b) 1 bis 10 Gew.-%, vorzugsweise 2 bis 8 Gew.-%, beträgt.

Die Erfindung betrifft ein teilchenförmiges Material zur Verwendung als Füllstoff in der wärmeempfindlichen Schicht eines wärmeempfindlichen Aufzeichnungsmaterials, insbesondere eines Thermoreaktpapiers.

Ein wärmeempfindliches Aufzeichnungsmaterial, z.B. ein Thermoreaktpapier, enthält im allgemeinen einen Träger und eine darauf erzeugte wärmeempfindliche Aufzeichnungsschicht, die im wesentlichen aus einem elektronenspendenden, farblosen oder nur leicht gefärbten Farbstoffvorläufer (Leukofarbstoff) und einem elektronenaufnehmenden Farbentwickler, meist einer phenolischen Verbindung, zusammengesetzt ist. Beim Erwärmen mit einem Thermokopf reagiert der Farbstoffvorläufer sofort mit dem Farbentwickler, wobei ein Aufzeichnungsbild oder Farbstoff-Entwickler-Komplexerhalten wird.

Diese wärmeempfindlichen Aufzeichnungsmaterialien werden in großem Umfang in Facsimilegeräten und Druckern sowie als Etikettenpapiere verwendet. Als Hauptanwendungsgebiet kann zweifellos der Facsimilebereich gelten, in dem aufgrund der ständig wachsenden Übertragungsgeschwindigkeit die Forderung nach immer empfindlicheren Aufzeichnungsmaterialien besteht. Dieser Forderung wird entsprochen durch den Zusatz von Sensibilisatoren, die eine Beschleunigung der Farbreaktion bewirken, sowie von feinteiligen Pigmenten, die ein Ankleben des geschmolzenen Farbstoff/Entwickler-Komplexes am Thermokopf verhindern sollen.

Diese feinteiligen Füllstoffpigmente zeichnen sich durch eine hohe Ölabsorption von im allgemeinen > 100 ml/100 g, eine hohe Teilchenfeinheit mit mittleren Sekundärteilchengrößen von im allgemeinen mindestens 70 Gew.-% < 4 $\mu$m (gemessen nach der Zentrifugalfällungsmethode) und eine möglichst geringe Oberflächenaktivität, d.h. eine möglichst geringe spezifische Oberfläche von im allgemeinen < 100 m$^2$/g (ermittelt nach der BET-Methode), aus. Letztere ist von Bedeutung für die Vermeidung von Hintergrundverfärbungen auf den thermoreaktiven Papieren, die durch eine unerwünschte Farbreaktion des Farbstoffvorläufers mit einem zu reaktiven Farbentwicklerpigment zustande kommen kann.

Als Weißpigmente kommen u.a. die an sich bekannten Papierpigmente, wie Calciumcarbonat, Kaolin, Talk, Aluminiumhydroxid, Titandioxid oder synthetische organische Pigmente zu Einsatz. Keines dieser Pigmente bzw. Pigmentgemische erfüllt allerdings alle oben genannten Kriterien; so mangelt es ihnen z.B. an einer ausreichenden Ölabsorption.

Aus der DE-A-3 942 692 (US-A-4 985 394) ist ein wärmeempfindliches Aufzeichnungsmaterial bekannt, das einen Schichtträger, eine auf dem Schichtträger befindliche wärmeempfindliche Färbeschicht mit einem Leukofarbstoff und einem Farbentwickler sowie eine auf der wärmeempfindlichen Färbeschicht aufgebrachte Schutzschicht enthält. Diese Schutzschicht enthält wenigstens ein anorganisches Pigment aus der Gruppe Kieselsäure und Calciumcarbonat, jeweils mit einem durchschnittlichen Teilchendurchmesser von 0,1$\mu$m oder darunter, und ein wasserlösliches Bindemittel. Das Pigment befindet sich also nicht in der wärmeempfindlichen Färbeschicht. Diese Anordnung hat den Nachteil, daß die Schutzschicht eine Wärmebarriere darstellt, die eine effektive Einwirkung des Thermokopfes auf die wärmeempfindliche Schicht des Aufzeichnungsmaterials behindert. Außerdem liegen die Kieselsäure und das Calciumcarbonat in Form einer mechanischen Mischung vor.

Aus der DE-A-3 911 199 sind wärmeempfindliche Aufzeichnungsmaterialien bekannt, die eine Zwischenschicht aus kolloidalem Siliciumdioxid und/oder Aluminiumoxid zwischen einem Träger und der wärmeempfindlichen Farbbildungsschicht enthalten. Das Siliciumdioxid kann auch in Form eines mechanischen Gemisches mit einem Weißpigment, wie Calciumcarbonat, vorliegen, d.h. diese beiden Komponenten sind nicht miteinander verbunden. Außerdem liegen sie nicht in der wärmeempfindlichen Farbbildungsschicht vor, sondern in der Zwischenschicht, die die Funktion einer Reflexionsschicht hat.

Aus der DE-A-3 019 591 (US-A-4 414 259) ist ein wärmeempfindliches Aufzeichnungsmaterial bekannt, das in der farbentwickelnden Schicht ein ölabsorptives Pigment, wie feinzerteiltes Siliciumdioxid, und ein anorganisches Pigment, wie Calciumcarbonat, enthält. Diese beiden Substanzen liegen jedoch nur in Form einer mechanischen Mischung vor und sind nicht miteinander verbunden.

Aus der DE-O-28 00 485 (US-A-4 168 845 und 4 311 758) ist ein ähnliches wärmeempfindliches Aufzeichnungsmaterial bekannt, bei dem das feinzerteilte Siliciumdioxid und das Weißpigment ebenfalls nur in Form eines mechanischen Gemisches vorliegen.

Aus der EP-B1-0 114 749 ist ein amorphes Silikat bekannt, das als Füllstoff für Thermoreaktpapiere geeignet ist. Die Herstellung erfolgt durch Umsetzung von Alkalisilikat mit Mineralsäure in einer konzentrierten Alkalisalzlösung, wobei zunächst unter Umgehung des Solzustandes direkt feinteilige amorphe Kieselsäure ausgefällt wird. Diese wird mit einem Metallhydroxid zu einem amorphen Silikat umgesetzt, das die notwendige geringe Oberflächenaktivität mit spez. Oberflächen von < 100 m$^2$/g, sowie eine Ölabsorption von 100 bis 200 ml /100 g aufweist. Die Sekundärkorngröße liegt bei 90 Gew.-% < 4 $\mu$m (gemessen nach der Zentrifugal-Fällungsmethode), das Schüttgewicht wird zu 0,14 bis 0,30 g/cm$^3$ angegeben.

Der Nachteil dieses Verfahrens besteht darin, daß große Mengen konzentrierter Salzlösungen verwendet werden müssen, die zu einem enormen Entsorgungsproblem und damit zu Umweltbelastungen führen können.

Aus der EP-B1-0 135 976 ist ein teilchenförmiges Material zur Verwendung als Füllstoff in der wärmeempfindlichen Schicht von wärmeempfindlichem Aufzeichnungspapier bekannt, wobei dieses Material feinteilige amorphe Kieselsäure mit einer spezifischen BET-Oberfläche von 10 bis 100 $m^2$/g und einem Schüttgewicht von 0,14 bis 0,30 g/$cm^3$ enthält; die feinteilige amorphe Kieselsäure hat eine mittlere Teilchengrößenverteilung von mindestens 90 Gew.-% < 4 $\mu$m. Die Herstellung dieses teilchenförmigen Materials erfolgt durch Umsetzung eines Alkalisilikats mit einer Säure in einer konzentrierten Alkalisalzlösung, wobei feine Teilchen eines Kieselgels unter Umgehung des Solzustandes ausgefällt werden.

Der Nachteil dieses Verfahrens besteht wiederum darin, daß große Mengen konzentrierter Salzlösungen verwendet werden müssen.

Überraschenderweise wurde nun gefunden, daß die an sich bekannten Papierfüllstoffe, die für einen Einsatz in wärmeempfindlichen Aufzeichnungsmaterialien eine zu geringe Ölabsorption aufweisen, sich mit gefällter Kieselsäure zu Füllstoffen verbinden lassen, die hinsichtlich Ölabsorption, Teilchenfeinheit und Oberflächenaktivität als Thermoreaktpigmente sehr gut geeignet sind.

Gegenstand der Erfindung ist somit ein teilchenförmiges Material zur Verwendung als Füllstoff in der wärmeempfindlichen Schicht eines wärmeempfindlichen Aufzeichungsmaterials, insbesondere eines Thermoreaktpapiers; dieses Material ist dadurch gekennzeichnet, daß es in Form von feinteiligen Weißpigmenten vorliegt, die überwiegend mit amorpher Fällungskieselsäure verbunden sind, wobei die amorphe Fällungskieselsäure das feinteilige Weißpigment entweder (a) schichtförmig umhüllt oder (b) in Form von feinen Teilchen punktförmig mit dem feinteiligen Weißpigment verbunden ist, wobei der Wassergehalt des Materials (b) 1 bis 10 Gew.-%, vorzugsweise 2 bis 8 Gew.-% beträgt.

Der angegebene Wassergehalt ist für die Variante (b) wichtig, da eine punktförmige Verbindung (durch Vermahlen) von trockenen Weißpigment- und Kieselsäure-Teilchen praktisch nicht möglich ist und eine Entmischung stattfindet. Der Wassergehalt des teilchenförmigen Materials ist bei der Variante (a) nicht so kritisch, da der Kontakt zwischen den Weißpigmentteilchen und der Fällungskieselsäure nicht punktförmig, sondern flächig ist.

Andererseits beobachtet man bei beiden Varianten eine Erhöhung der Hintergrundverfärbung, wenn der Wassergehalt mehr als 10 Gew.-% beträgt.

Der angegebene Wassergehalt findet sich vor allem in den Teilchen der amorphen Fällungskieselsäure, daneben aber auch zu einem gewissen Grad in den Weißpigmentteilchen.

Vorzugsweise werden als Weißpigmente Erdalkalicarbonate, wie Calciumcarbonat und/oder Magnesiumcarbonat, Erdalkalihydroxide oder Aluminiumhydroxid (bei a und b), calcinierter Kaolin, ein Pigment auf der Basis von Harnstoff-Formaldehyd-Harz (nur bei b) oder Mischungen dieser Pigmente verwendet.

Vorzugsweise ist das nicht verbundene Weißpigment zu 100 % < 25 $\mu$m (gemessen in wäßriger Suspension am Malvern Particle Sizer 2600 C), wobei der mittlere Korndurchmesser (d50) zwischen etwa 2 und 4 $\mu$m liegt.

Insbesondere hat das erfindungsgemäße Material eine Ölabsorption (nach DIN 52199) von 100 bis 200 ml/100 g, vorzugsweise von etwa 150 ml/100 g.

Vorzugsweise beträgt seine spezifische BET-Oberfläche 30 bis 90 $m^2$/g, insbesondere etwa 60 $m^2$/g.

Das erfindungsgemäße Material hat nach dem Verbinden der Weißpigmentteilchen mit der amorphen Fällungskieselsäure und gegebenenfalls nach dem anschließenden Vermahlen ein Korngrößenspektrum von 100 bis 0,5 $\mu$m, wobei der mittlere Korndurchmesser bei etwa 3 bis 8 $\mu$m, vorzugsweise bei etwa 4 bis 6 $\mu$m liegt.

Vorzugsweise enthält das teilchenförmige Material 95 bis 20 Gew.-%, vorzugsweise 80 bis 30 Gew.%, Weißpigment und 5 bis 80 Gew.-%, vorzugsweise 20 bis 70 Gew.-% (bezogen auf trockenes $SiO_2$) amorphe Kieselsäure.

Nach der ersten Verfahrensvariante kann das vorstehend definierte teilchenförmige Material dadurch hergestellt werden, daß man eine Suspension des feinteiligen Weißpigments mit einer Alkaliwasserglaslösung vermischt, den pH-Wert des Gemischs durch Zudosieren einer Säure oder durch Einleiten von gasförmigem $CO_2$ soweit herabsetzt, daß amorphe Kieselsäure auf dem Weißpigment abgeschieden wird; und das so erhaltene Material gegebenenfalls bis auf einen Wassergehalt von 1 bis 10 Gew.-%, vorzugsweise von 2 bis 8 Gew.-% trocknet und vermahlt.

Die Verbindung zwischen Weißpigmentteilchen und Fällungskieselsäure ist bei dieser Verfahrensvariante besonders gut, da die im wäßrigen Medium abgeschiedene Fällungkieselsäure die Weißpigmentteilchen flächig umhüllt.

Es versteht sich von selbst, daß die Erniedrigung des pH-Werts bei Einsatz basischer Pigmente, wie Calciumcarbonat oder Magnesiumcarbonat, sehr sorgfältig gesteuert werden muß, um Verluste aufgrund einer Reaktion der Pigmentteilchen mit der Säure zu vermeiden.

Ein großer Vorteil dieser Verfahrensvariante beruht auf der Möglichkeit, im Gegensatz zu dem Verfahren nach der EP-B1-0 135 976 und der EP-B1-0 135 976 ohne Salzlösung zu arbeiten, wodurch die damit verbundenen Umweltprobleme vermieden werden können. Weiterhin war es überraschend, daß das erfindungsgemäße Gemisch Eigenschaften hat, die denen von reiner amorpher Fällungskieselsäure entsprechen, obwohl die Weißpigmentteilchen gewissermaßen nur als "Streckpigmente" fungieren.

Vorzugsweise verwendet man bei der ersten Verfahrensvariante eine wäßrige Weißpigmentsuspension mit einem Feststoffgehalt von etwa 10 bis 50 Gew.-%, vorzugsweise von etwa 20 Gew.-%.

Die Alkaliwasserglaslösung wird vorzugsweise in einer Konzentration von 10 bis 30 Gew.-%, insbesondere von etwa 15 Gew.-% (bezogen auf $SiO_2$) eingesetzt.

Als Säure verwendet man vorzugsweise eine Mineralsäure, wie Salzsäure, Schwefelsäure oder Phosphorsäure, oder eine organische Säure, wie Essigsäure.

Ein besonderer Vorteil dieser Verfahrensvariante besteht darin, daß man das Fällungsprodukt zum Beispiel mittels einer Jet-Mühle ohne Erhöhung der spezifischen Oberfläche zerkleinern kann.

Nach einer zweiten Verfahrensvariante kann das erfindungsgemäße teilchenförmige Material dadurch hergestellt werden, daß man als feinteiliges Weißpigments ein Erdalkalicarbonat oder Aluminiumhydroxid oder ein Gemisch dieser Pigmente mit feinteiliger amorpher Fällungskieselsäure vermahlt, wobei der Wassergehalt der Fällungskieselsäure und/oder des Weißpigments so eingestellt wird, daß das Mahlgemisch einen Wassergehalt von 1 bis 10 Gew.-%, vorzugsweise von 2 bis 8 Gew.-% hat.

Bei dieser Verfahrensvariante ist der Wassergehalt für eine ausreichende Bindung zwischen den Weißpigmentteilchen und den Teilchen der amorphen Fällungskieselsäure kritisch. Wahrscheinlich findet beim Vermahlen an der Oberfläche der Teilchen eine Festkörperreaktion statt, die durch die Anwesenheit geringer Mengen von Wasser begünstigt wird, so daß eine feste Bindung zwischen den Teilchen erhalten wird. Eine solche Bindung kann nicht erhalten werden, wenn man die Teilchen trocken miteinander vermahlt.

Ein Vorteil der zweiten Verfahrensvariante besteht darin, daß die gefällte amorphe Kieselsäure auch verhältnismäßig grobkörnig sein kann. Die gemeinsam vermahlenen Produkte sind Vergleichsproben, die durch getrennte Vermahlung auf dieselbe Körnung gebracht und anschließend homogenisiert wurden, qualitativ überlegen. Als Erdalkalicarbonate können wie bei der ersten Verfahrensvariante natürliche oder gefällte Typen verwendet werden. Aufgrund des gewöhnlich höheren Weißgrades werden gefällte Typen bevorzugt.

Das Vermahlen wird vorzugsweise in einer Kugel-, Schlagrotor-, Stiftkranz- oder Jetmühle durchgeführt.

Vorzugsweise geht man von einer Fällungskieselsäure mit einem Kornspektrum von etwa 100 bis 1 $\mu m$ aus, wobei der mittlere Korndurchmesser (d 50) zwischen etwa 10 und 3 $\mu m$, vorzugsweise zwischen etwa 7 und 4 $\mu m$, liegt.

Der Anteil an feinteiligem Weißpigment beträgt bei der zweiten Verfahrensvariante vorzugsweise 1 bis 50 Gew.-%, insbesondere 10 bis 40 Gew.-%.

Gegenstand der Erfindung ist ferner ein wärmeempfindliches Aufzeichnungsmaterial, insbesondere ein Thermoreaktpapier, dessen wärmeempfindliche Schicht das vorstehend beschriebene teilchenförmige Material als Füllstoff enthält.

Die Erfindung ist durch die nachstehenden Beispiele in nicht einschränkender Weise erläutert. Die Beispiele 1, 2 und 5 bis 8 erläutern die ersten Verfahrensvariante; die Beispiele 10, 11 bis 14 und 17 bis 20 erläutern die zweite Verfahrensvariante. Bei den Beispielen 3, 4, 9, 12, 13, 15 und 16 handelt es sich um Vergleichsbeispiele.

Beispiel 1

Gefälltes Calciumcarbonat mit einem mittleren Korndurchmesser von 2,7 $\mu m$ wurde in Wasser dispergiert (Feststoffgehalt 20 Gew-%) und unter kräftigem Rühren langsam mit einer 20 %igen Natriumsilikatlösung in einer Menge, die einem $SiO_2$-Gehalt von 30 Gewichtsteilen entsprach, versetzt. Nach dem Erwärmen auf 80°C wurde der stark alkalische pH-Wert von > 13 mittels verdünnter Schwefelsäure langsam auf 9,7 gesenkt. Die Suspension wurde 30 Minuten bei 80°C gealtert und heiß unter Anlegen von Vakuum filtriert. Nach schonender Trocknung bei 75°C wurde das Produkt auf einer Fließbett-Gegenstrahlmühle (Jet-Mühle) auf einen mittleren Korndurchmesser (d50) von 4,0 $\mu m$ vermahlen. Der mittlere Korndurchmesser wurde unter Verwendung eines Malvern 2600 C Particle-sizer in wäßriger Lösung ermittelt:

Die Ergebnisse sind in Tabelle I zusammengefaßt. Die Meßdaten wurden nach folgenden Verfahren ermittelt:
- Ölabsorption: Die Prüfung erfolgte nach DIN 53199

- spezifische Oberfläche: Die Messung erfolgte nach der in J.Am.Chem.Soc. 60, 309 (1938) von S. Brunauer, P.H. Emmet und E. Teller beschriebenen, sogenannten BET-Methode bei der Temperatur des flüssigen Stickstoffs.
- Oberflächenaktivität: Zur Ermittlung der Eigenreaktivität der Pigmente - und damit der Hintergrundverfärbung eines Thermoreaktstriches wurden 95 Gewichtsteile des zu testenden Pigments zusammen mit 5 Gewichtsteilen eines Styrol-Butadien-Kautschuk-Bindemittels (SBR-Binder; DOW Latex 675) zu einer einfachen Streichfarbe verarbeitet und bei 6 g/m$^2$ auf holzfreies Streichrohpapier gerakelt.

Nach der Trocknung und Äquilibrierung bei 50 % rel. Luftfeuchte wurde mit einem Selbstdurchschreibe-CB-Blatt, dessen Kapseln Kristallviolettlacton (CVL) als Leukofarbstoff enthielten, an einem Laborkalander eine Farbkopie erzeugt. Die Intensität dieser Kopie war das Maß für die Oberflächenaktivität (Eigenreaktivität) der Pigmente. Hierbei wurde folgende Bewertung angewendet:

| Symbol | Bewertung |
|--------|-----------|
| + | geringe Oberflächenaktivität, geringe Hintergrundverfärbung |
| o | mittlere Oberflächenaktivität, mittlere Hintergrundverfärbung |
| - | hohe Oberflächenaktivität, hohe Hintergrundverfärbung |

Beispiel 2

Die Reaktionsführung erfolgte analog zu dem in Beispiel 1 beschriebenen Verfahren. Es wurde lediglich die Einstellung der Korngröße (d50 = 4,0 $\mu$m) in einer Rotationskugelmühle durchgeführt.

Die Ergebnisse sind in Tabelle I zusammengefaßt.

Beispiel 3 (Vergleich)

Natriumsilikat (Wasserglas) wurde in destilliertem Wasser vorgelegt, wobei dieselben Silikatkonzentrationen wie in Beispiel 1 eingehalten wurden. Nach dem Erwärmen auf 80°C wurde langsam mit verdünnter Schwefelsäure auf einen pH-Wert von 9,7 titriert. Nach 30-minütiger Alterung bei 80°C wurde das Fällprodukt abfiltriert, schonend bei 75°C bis auf einen Wassergehalt von 5 % getrocknet und mit Hilfe der Jet-Mühle auf einen mittleren Korndurchmesser von 4,2 $\mu$m vermahlen.

Die Ergebnisse sind in Tabelle I zusammengefaßt.

Beispiel 4 (Vergleich)

Die nach Vergleichsbeispiel 3 hergestellte amorphe Kieselsäure wurde im Gewichtsverhältnis 30/70 mit dem gefällten Calciumcarbonat von Beispiel 1 trocken homogenisiert. Das Verhältnis Kieselsäure/Calciumcarbonat entsprach somit dem von Beispiel 1.

Die Ergebnisse sind in Tabelle I zusammengefaßt.

Beispiel 5

Die Arbeitsweise nach Beispiel 1 wurde mit der Abweichung wiederholt, daß das gefällte Calciumcarbonat mit 50 Gewichtsteilen (bezogen auf SiO$_2$-Gehalt) Natriumsilikatlösung vermischt wurde.

Die Ergebnisse sind in Tabelle I zusammengefaßt.

Beispiel 6

Calciniertes Kaolin mit einer mittleren Teilchengröße von 2,9 $\mu$m wurde in Wasser dispergiert (Feststoffgehalt 20 Gew.-%) und unter kräftigen Rühren mit einer Natriumsilikatlösung vermischt (50 Gew.-% bezogen auf SiO$_2$). Nach dem Erwärmen auf 80°C wurde der pH-Wert mit verdünnter Schwefelsäure langsam auf 9,5 eingestellt. Das Fällungsprodukt wurde 30 Minuten altern gelassen, isoliert, bei 75°C getrocknet und in der Jet-Mühle auf einen mittleren Korndurchmesser von 3,9 $\mu$m gebracht.

Die Ergebnisse sind in Tabelle I zusammengefaßt.

Beispiel 7

Die Arbeitsweise von Beispiel 6 wurde mit der Abweichung wiederholt, daß der pH-Wert mit Schwefelsäure auf 8,0 eingestellt wurde.

Die Ergebnisse sind in Tabelle I zusammengefaßt.

Beispiel 8

Aluminiumhydroxid mit einem mittleren Teilchendurchmesser von 2,5 $\mu$m wurde in Wasser dispergiert (Feststoffgehalt 20 %) und mit einer Natriumsilikatlösung (50 %, bezogen auf den $SiO_2$-Gehalt) vermischt. Die Fällung der Kieselsäure erfolgte wieder bei 80°C durch Zutropfen von Schwefelsäure bis zu einem pH-Wert von 9,5.

Die Ergebnisse sind in Tabelle I zusammengefaßt.

Beispiel 9 (Vergleich)

Den Beispielen 1 bis 8 wurde zum Vergleich eine nach EP-B1-0 114 749 hergestellten Fällungskieselsäure (Handelsprodukt Mizukasil P832) gegenübergestellt.

Die Ergebnisse sind in Tabelle I zusammengefaßt.

TABELLE I: Eigenschaften der Thermoreakt-Füllstoffe

| | spez. Ober-fläche m²/g | Ölabsorption ml/100 g | mittl. Teilchen-durchmesser d 50 | Oberflächen-aktivität |
|---|---|---|---|---|
| Beispiel 1 | 57 | 126 | 4,0 | + |
| Beispiel 2 | 95 | 130 | 4,2 | 0 bis + |
| Beispiel 3 (Vergleich) | 300 | 260 | 4,2 | - |
| Beispiel 4 (Vergleich) | 90 | 95 | 4,3 | - bis 0 |
| Beispiel 5 | 65 | 162 | 4,0 | + |
| Beispiel 6 | 77 | 150 | 3,9 | + |
| Beispiel 7 | 85 | 158 | 4,1 | + |
| Beispiel 8 | 62 | 152 | 3,9 | + |
| Beispiel 9 (Vergleich) | 50 | 210 | 4,3 | - bis 0 |

Tabelle I zeigt, daß die erfindungsgemäßen Materialien die Anforderungen an einen Füllstoff für thermoreaktive Papiere bestens erfüllen. Darüber hinaus zeigt der Vergleich zwischen Beispiel 1 und Beispiel 2, daß bei Verwendung einer Jet-Mühle zur Einstellung der notwendigen Körnung eine geringere Oberflächenaktivität erhalten wird. Das Vergleichsbeispiel 3 zeigt, daß ein Material mit einer hohen spezifischen Oberfläche nicht brauchbar ist, auch wenn es, wie im Vergleichsbeispiel 4 geschehen, mit gefälltem Calciumcarbonat trocken homogenisiert wird.

Schließlich zeigt das Vergleichsbeispiel 9 die Überlegenheit des erfindungsgemäßen Materials gegenüber dem Material nach der EP-B1-0 114 749.

Folgende Beispiele erläutern die zweite Verfahrensvariante:

Beispiel 10

Eine handelsübliche amorphe Fällungskieselsäure mit einer Ölabsorption von 228 ml/100 g, einer spezifischen Oberfläche von 55 m$^2$/g und einem Kornspektrum von 70 bis 1 $\mu$m, bei einem mittleren Korndurchmesser (d 50) von 18 $\mu$m (gemessen im Malvern Particle Sizer 2600 C) wurde in einer Schlagrotormühle in einem Gewichtsverhältnis von 60/40 mit gefälltem Calciumcarbonat mit einem mittleren Korndurchmesser von 2,7 $\mu$m vermahlen. Der Wassergehalt des Mahlguts betrug 4 bis 5 Gew.-%. Die Ergebnisse sind in Tabelle II zusammengefaßt. Die Meßdaten wurden, wie in Beispiel 1 angegeben, ermittelt; Entsprechendes gilt für die Bewertungssymbole.

Beispiel 11 (Vergleich)

Die amorphe Fällungskieselsäure und das Calciumcarbonat von Beispiel 10 wurden in den dort angegebenen Gewichtsverhältnissen in einer 30 Gew.-%igen wäßrigen Aufschlämmung zwei Stunden bei 80°C gerührt, abgesaugt, schonend bei 70°C auf einen Wassergehalt von 5 Gew.-% getrocknet und in der Schlagrotormühle auf einen mittleren Korndurchmesser von 5,2 $\mu$m vermahlen.

Die Ergebnisse sind in Tabelle II zusammengefaßt.

Beispiel 12 (Vergleich)

Die amorphe Fällungskieselsäure und das Calciumcarbonat von Beispiel 10 wurden in dem dort angegebenen Gewichtsverhältnis in einer 25 Gew.-%igen wäßrigen Aufschlämmung in einer Perlmühle auf einen mittleren Korndurchmesser (d 50) von 5,0 $\mu$m vermahlen. Die Aufschlämmung wurde abgesaugt, schonend bei 70°C auf einen Wassergehalt von 5,0 Gew.-% getrocknet und desaggregiert.

Die Ergebnisse sind in Tabelle II zusammengefaßt.

Beispiel 13 (Vergleich)

Die Arbeitsweise von Beispiel 10 wurde mit der Abweichung wiederholt, daß vor der Vermahlung ein Wassergehalt von 15 Gew-% eingestellt wurde, der sich beim Mahlschritt auf 12 Gew.-% reduzierte. Der mittlere Korndurchmesser (d 50) wurde zu 5,3 $\mu$m bestimmt.

Die Ergebnisse sind in Tabelle II zusammengefaßt.

Beispiel 14

Die amorphe Fällungskieselsäure mit den in Beispiel 10 angegebenen Eigenschaften wurde im Gewichtsverhältnis 70/30 zusammen mit handelsüblichem Calciumcarbonat mit einer mittleren Korngröße von 2,0 $\mu$m in einer Jetmühle auf eine mittlere Korngröße von 3,8 $\mu$m vermahlen. Der Wassergehalt betrug etwa 5 Gew.-%.

Die Ergebnisse sind in Tabelle II angegeben.

Beispiel 15 (Vergleich)

Die amorphe Fällungskieselsäure von Beispiel 10 wurde vermahlen und anschließend im Gewichtsverhältnis 70/30 mit dem Calciumcarbonat von Beispiel 14 trocken homogenisiert. Der mittlere Korndurchmesser der Mischung betrug 3,8 $\mu$m.

Die Ergebnisse sind in Tabelle II angegeben.

Beispiel 16 (Vergleich)

Eine nach dem in der EP-B1-0 114 749 beschriebenen Verfahren hergestellt handelsübliche amorphe Kieselsäure zum Einsatz in Thermoreaktpapieren wurde trocken mit dem Calciumcarbonat von Beispiel 14 im Gewichtsverhältnis 70/30 homogenisiert. Es stellte sich hierbei eine mittlere Korngrößenverteilung von etwa 4 $\mu$m ein.

Die Ergebnisse sind in Tabelle II angegeben.

Beispiel 17

Die Arbeitsweise von Beispiel 14 wurde mit der Abweichung wiederholt, daß die Jetmühle bei erhöhter Temperatur (etwa 100°C) gefahren wurde, so daß beim Mahlschritt der Wassergehalt von 5 Gew.-% auf etwa 1,5 Gew.-% reduziert wurde. Der mittlere Korndurchmesser betrug 4,0 $\mu$m.
Die Ergebnisse sind in Tabelle II angegeben.

Beispiel 18

Die nach Beispiel 10 verwendete amorphe Fällungskieselsäure wurde im Gewichtsverhältnis 60/40 mit dem Calciumcarbonat von Beispiel 10 bei einer Pigmentfeuchte von 5 Gew.-% durch eine Stiftkranzmühle gefahren und auf eine mittlere Korngroße von 8,5 $\mu$m vermahlen. Das Kornspektrum des Produkts reichte von etwa 100 bis etwa 1 $\mu$m.
Die Ergebnisse sind in Tabelle II angegeben.

Beispiel 19

Die Arbeitsweise von Beispiel 18 wurde mit der Abweichung wiederholt, daß durch eine etwas höhere Mahlenergie ein mittlerer Korndurchmesser von 6,6 $\mu$m bei einem Gesamt-Kornspektrum von etwa 50 bis 1 $\mu$m eingestellt wurde. Die Ergebnisse sind in Tabelle II angegeben.

Beispiel 20

Die Arbeitsweise von Beispiel 17 wurde mit der Abweichung wiederholt, daß ein mittlerer Korndurch-messer von 5,2 $\mu$m bei einem Gesamt-Kornspektrum von etwa 30 bis 1 $\mu$m eingestellt wurde.
Die Ergebnisse sind in Tabelle II angegeben.

TABELLE II: Eigenschaften der Thermoreakt-Füllstoffe

| Beisp. | Kieselsäure /CaCO$_3$ | Vermahlung/ Homogenisierung | Wassergehalt bei Vermahlung (%) | mittl. Korndurchmesser d 50 (µm) | spez. Oberfläche m²/g | Ölabsorption ml/100 g | Oberflächenaktivität |
|---|---|---|---|---|---|---|---|
| 10 | 60/40 | Schlagrotormühle | 4 – 5 | 5,2 | 36 | 148 | + |
| 11 | 60/40 | Schlagrotormühle | 5 | 5,2 | 40 | 150 | 0 |
| 12 | 60/40 | Perlmühle | 75 | 5,0 | 52 | 148 | 0 |
| 13 | 60/40 | Schlagrotormühle | 12 – 15 | 5,3 | 44 | 140 | 0 |
| 14 | 70/30 | Jetmühle | 5 | 3,8 | 43 | 140 | + bis 0 |
| 15 | 70/30 | Homogenisator | 5 | 3,8 | 48 | 138 | 0 bis – |
| 16 | 70/30 | Homogenisator | 5 | 4,0 | 40 | 153 | 0 bis – |
| 17 | 70/30 | Jetmühle | 5 | 4,0 | 40 | 154 | + |
| 18 | 60/40 | Stiftkranzmühle | 5 | 8,5 | 40 | 122 | + |
| 19 | 60/40 | Stiftkranzmühle | 5 | 6,6 | 42 | 132 | + |
| 20 | 60/40 | Stiftkranzmühle | 5 | 5,2 | 45 | 145 | + |

Tabelle II zeigt, daß die erfindungsgemäßen Beispiele die Anforderungen an einen Füllstoff für thermoreaktive Papiere bestens erfüllen. Der Vorteil des beschriebenen einfachen Verfahrens der gemeinsamen Vermahlung der Kieselsäure mit dem Erdalkalicarbonat bei geringem Wassergehalt über die Vermahlung bei hohem Wassergehalt, die Vorbehandlung in wäßriger Suspension und die Naßvermahlung für die geringere Oberflächenaktivität (Hintergrundverfärbung) wird durch den Vergleich zwischen dem Beispiel 10 mit den Vergleichsbeispielen 11 bis 13 klar. Ebenso zeigt der Vergleich zwischen den Beispielen 14 und 17 und den Beispielen 15 und 16 deutlich, daß die erfindungsgemäße gemeinsame Vermahlung gegenüber einer getrennten Vermahlung von Kieselsäure und Erdalkalicarbonat mit anschließender Homogenisierung zu bevorzugen ist. Durch die gemeinsame Vermahlung wird offensichtlich die Reaktivität der Kieselsäure durch das Erdalkalicarbonat chemisch verändert.

Die Beispiele 18 bis 20 zeigen, daß entgegen der bisher vorherrschenden Meinung bei Anwendung des erfindungsgemäßen Verfahrens relativ grobkörnige Produkte hergestellt werden können, die als Thermoreakt-Füllstoffe bestens geeignet sind. Es wurde nachgewiesen, daß die grobkörnigen Produkte nach den Beispielen 18 und 19 nach der normalen Aufbereitung der Thermostreichfarbe in einer Naßkugelmühle nach der Applikation auf einem geeigneten Rohpapier in Abrasivität, Hintergrundaktivität und Dynamisierung der Thermoreaktion dieselben Ergebnisse lieferte wie bedeutend feinere Produkte.

**Patentansprüche**

1. Teilchenförmiges Material zur Verwendung als Füllstoff in der wärmeempfindlichen Schicht eines wärmeempfindlichen Aufzeichnungsmaterials, dadurch gekennzeichnet, daß das Material in Form von feinteiligen Weißpigmenten vorliegt, die überwiegend mit amorpher Fällungskieselsäure verbunden sind, wobei die amorphe Fällungskieselsäure das feinteilige Weißpigment entweder (a) schichtförmig umhüllt oder (b) in Form feiner Teilchen punktförmig mit dem feinteiligen Weißpigment verbunden ist, wobei der Wassergehalt des Materials (b) 1 bis 10 Gew.-%, vorzugsweise 2 bis 8 Gew.-%, beträgt.

2. Material nach Anspruch 1, dadurch gekennzeichnet, daß das Weißpigment ein Erdalkalicarbonat, wie Calciumcarbonat oder Magnesiumcarbonat, ein Erdalkalihydroxid, Aluminiumhydroxid (bei a und b), calcinierter Kaolin, ein Pigment auf der Basis von Harnstoff-Formaldehyd-Harz (bei a) oder Mischungen dieser Pigmente darstellen.

3. Material nach Anspruch 1 oder 2, dadurch gekennzeichnet, daß das nicht verbundene Weißpigment zu 100 % < 25 $\mu$m ist, wobei der mittlere Korndurchmesser (d50) zwischen etwa 2 und 4 $\mu$m liegt.

4. Material nach einem der Ansprüche 1 bis 3, dadurch gekennzeichnet, daß es eine Ölabsorption (nach DIN 53199) von 100 bis 200 ml/100 g, vorzugsweise von 150 ml/100 g aufweist.

5. Material nach einem der Ansprüche 1 bis 4, dadurch gekennzeichnet, daß seine spezifische BET-Oberfläche 30 bis 90 $m^2$/g, vorzugsweise etwa 60 $m^2$/g beträgt.

6. Material nach einem der Ansprüche 1 bis 5, dadurch gekennzeichnet, daß es nach dem Verbinden mit der amorphen Fällungskieselsäure bzw. gegebenenfalls nach dem anschließenden Vermahlen ein Korngrößenspektrum von 100 bis 0,5 $\mu$m hat, wobei der mittlere Korndurchmesser bei etwa 3 bis 8 $\mu$m, vorzugsweise bei etwa 4 bis 6 $\mu$m liegt.

7. Material nach einem der Ansprüche 1 bis 6, dadurch gekennzeichnet, daß es 95 bis 20 Gew.-%, vorzugsweise 80 bis 30 Gew.%, Weißpigment und 5 bis 80 Gew.-%, vorzugsweise 20 bis 70 Gew.-% (bezogen auf trockenes $SiO_2$) amorphe Kieselsäure enthält.

8. Verfahren zur Herstellung eines teilchenförmigen Materials nach einem der Ansprüche 1 bis 7, dadurch gekennzeichnet, daß man eine Suspension des feinteiligen Weißpigments mit einer Alkaliwasserglaslösung vermischt, den pH-Wert des Gemischs durch Zudosieren einer Säure oder durch Einleiten von gasförmigem $CO_2$ soweit herabsetzt, daß amorphe Kieselsäure auf dem Weißpigment abgeschieden wird; und das erhaltene Material gegebenenfalls bis auf einen Wassergehalt von 1 bis 10 Gew.-%, vorzugsweise von 2 bis 8 Gew.-% trocknet und vermahlt.

9. Verfahren nach Anspruch 8, dadurch gekennzeichnet, daß man eine wäßrige Weißpigmentsuspension mit einem Feststoffgehalt von etwa 10 bis 50, vorzugsweise von etwa 20 Gew.-% verwendet.

10. Verfahren nach Anspruch 8 oder 9, dadurch gekennzeichnet, daß man die Alkaliwasserglaslösung in einer Konzentration von 10 bis 30 Gew.-%, insbesondere von etwa 15 Gew.-% (bezogen auf $SiO_2$) einsetzt.

11. Verfahren nach einem der Ansprüche 8 bis 10, dadurch gekennzeichnet, daß man als Säure eine Mineralsäure, wie Salzsäure, Schwefelsäure oder Phosphorsäure, oder eine organische Säure, wie Essigsäure, verwendet.

12. Verfahren nach einem der Ansprüche 8 bis 11, dadurch gekennzeichnet, daß man das Fällungsprodukt mittels einer Jet-Mühle ohne Erhöhung der spezifischen Oberfläche zerkleinert.

13. Verfahren zur Herstellung eines teilchenförmigen Materials nach einem der Ansprüche 1 bis 7, dadurch gekennzeichnet, daß man als feinteiliges Weißpigments ein Erdalkalicarbonat, ein Erdalkalihydroxid oder Aluminiumhydroxid oder ein Gemisch dieser Pigmente mit amorpher Fällungskieselsäure vermahlt, wobei der Wassergehalt der Fällungskieselsäure und/oder des Weißpigments so eingestellt wird, daß das Mahlgemisch einen Wassergehalt von 1 bis 10 Gew.-%, vorzugsweise von 2 bis 8 Gew.-% hat.

14. Verfahren nach Anspruch 13, dadurch gekennzeichnet, daß man das Vermahlen in einer Kugel-, Schlagrotor-, Stiftkranz- oder Jetmühle durchführt.

15. Verfahren nach Anspruch 13 oder 14, dadurch gekennzeichnet, daß man von einer Fällungskieselsäure mit einem Kornspektrum von 100 bis 1 $\mu$m ausgeht, wobei der mittlere Korndurchmesser d 50 zwischen etwa 5 und 20 $\mu$m, vorzugsweise zwischen etwa 10 und 15 $\mu$m liegt.

16. Verfahren nach einem der Ansprüche 13 bis 15, dadurch gekennzeichnet, daß der Anteil an feinteiligem Weißpigment bei 1 bis 50, vorzugsweise bei 10 bis 40 Gew.-% liegt.

17. Wärmeempfindliches Aufzeichnungsmaterial, insbesondere Thermoreaktpapier, dadurch gekennzeichnet, daß seine wärmeempfindliche Schicht ein teilchenförmiges Material nach einem der Ansprüche 1 bis 7 oder hergestellt nach einem der Ansprüche 8 bis 12 und/oder 13 bis 16, als Füllstoff enthält.

Europäisches
Patentamt

**EUROPÄISCHER RECHERCHENBERICHT**

Nummer der Anmeldung

EP    92 11 6061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 135 976 (MIZUSAWA INDUSTRIAL CHEMICALS K.K.) * Seite 10, Zeile 4 - Seite 12, Zeile 14 * --- | 1-17 | B41M5/30 C09C3/06 C09C1/02 C09C1/40 C09C1/42 C09C1/00 |
| A | PATENT ABSTRACTS OF JAPAN vol. 11, no. 225 (M-609)(2672) 22. Juli 1987 & JP-A-62 039 279 ( TOKUYAMA SODA K.K. ) 20. Februar 1987 * Zusammenfassung * --- | 1-17 | |
| A | CHEMICAL ABSTRACTS, vol. 82, no. 17, 28. April 1975, Columbus, Ohio, US; abstract no. 113652, T.KOZAKURA ET AL. 'Finely powdered silica' Seite 112 ;Spalte 2 ; * Zusammenfassung * & PATENT ABSTRACTS OF JAPAN & JP-A-49 036 876 ( NIPPON SODA K.K. ) 3. Oktober 1974 * Zusammenfassung * ----- | 1-17 | |

RECHERCHIERTE SACHGEBIETE (Int. Cl.5)

B41M
C09C

Der vorliegende Recherchenbericht wurde für alle Patentansprüche erstellt

| Recherchenort | Abschlußdatum der Recherche | Prüfer |
|---|---|---|
| DEN HAAG | 15 DEZEMBER 1992 | BACON A.J. |